# EUROPÄISCHE PATENTSCHRIFT

(11) **EP 3 173 386 B1**
(45) Veröffentlichungstag und Bekanntmachung des Hinweises auf die Patenterteilung: **02.05.2018**
(21) Anmeldenummer: 15196193.5
(22) Anmeldetag: 25.11.2015
(51) Int. Cl.: C03B 19/06, C03C 4/08, C03C 3/06

(54) **VERFAHREN ZUR HERSTELLUNG EINES VERBUNDKÖRPERS AUS HOCHKIESELSÄUREHALTIGEM WERKSTOFF**
METHOD FOR PRODUCING A COMPOSITE BODY FROM A MATERIAL WITH A HIGH SILICA CONTENT
PROCEDE DE FABRICATION D'UN CORPS COMPOSITE A PARTIR DE MATIERE À HAUTE TENEUR EN SILICE

(43) Veröffentlichungstag der Anmeldung: 31.05.2017
(73) Patentinhaber: Heraeus Quarzglas GmbH & Co. KG, 63450 Hanau (DE)
(72) Erfinder: SCHENK, Christian, 55218 Ingelheim (DE); WESSELY, Frank, 64807 Dieburg (DE); SCHEICH, Gerrit, 63500 Seligenstadt (DE)
(74) Vertreter: Staudt, Armin Walter

(56) Entgegenhaltungen:
- WO-A1-2015/067688
- DE-A1- 10 344 189
- DE-A1-102004 052 312
- DE-A1-102004 054 392
- DE-A1-102005 059 291
- DE-A1-102007 030 698
- DE-B3-102012 012 524
- JP-A- H03 202 111
- JP-A- H03 202 112
- JP-A- H03 202 116

## Beschreibung

### Technischer Hintergrund

Die vorliegende Erfindung betrifft ein Verfahren zur Herstellung eines Verbundkörpers mit einer ersten Schicht aus hochkieselsäurehaltigem Werkstoff mit einer Zusatzkomponente in einer ersten Konzentration, verbunden mit einer zweiten Schicht aus hochkieselsäurehaltigem Werkstoff mit einer Zusatzkomponente in einer zweiten Konzentration, die sich von der ersten Konzentration unterscheidet und die erste und die zweite Konzentration größer oder gleich Null ist.

### Stand der Technik

Unter einem hochkieselsäurehaltigen Werkstoff wird hier dotiertes oder undotiertes Quarzglas mit einem SiO₂-Gehalt von mindestens 85 % verstanden. Dieser Werkstoff wird im Folgenden auch kurz als "Quarzglas" bezeichnet. Quarzglas zeichnet sich durch einen niedrigen thermischen Ausdehnungskoeffizienten, durch optische Transparenz über einen weiten Wellenlängenbereich sowie durch hohe chemische und thermische Beständigkeit aus.

Zum Erzeugen besonderer Eigenschaften wird Quarzglas mit anderen Substanzen dotiert, wie etwa mit Titan, Aluminium, Bor oder Germanium. Diese Substanzen werden in sehr geringen Mengen hinzugefügt und wirken als Fremdatome in der Glasstruktur, ohne eine zweite Phase neben der Matrix auszubilden.

Als "Schwarzglas" wird hier ein Quarzglas bezeichnet, das eine Zusatzkomponente enthält, wobei in eine Matrix aus Quarzglas eine zweite Phase aus Kohlenstoff, Silizium, Siliziumcarbid, Siliziumnitrid, Titannitrid oder Titancarbid eingelagert und zu einem Kompositwerkstoff verdichtet ist. Die feinteiligen Bereiche der eingelagerten Phase (beispielsweise Si-Phase oder Kohlenstoff-Phase) fungieren als optische Störstellen und führen dazu, dass der Kompositwerkstoff bei Raumtemperatur visuell schwarz oder grau erscheint. Andererseits haben die Störstellen auch Auswirkungen auf die Wärmeabsorption bzw. Wärmeemission des Kompositwerkstoffs insgesamt. Wärmestrahlung zwischen 2 µm und 8 µm, also im Wellenlängenbereich der infraroten Strahlung wird stark absorbiert. Das hohe Absorptions- und Emissionsvermögen für Wärmestrahlung vermindert deren Reflexion an den Oberflächen des Kompositwerkstoffs. Lokale, nicht reproduzierbare Aufheizungen durch reflektierte Wärmestrahlung werden so vermieden und eine gleichmäßige Temperaturverteilung in der Umgebung des Kompositwerkstoffs erzielt. Der hohe Emissionsgrad des Kompositwerkstoffs prädestiniert das Bauteil insbesondere für den Einsatz bei Wärmebehandlungen, bei denen es auf eine reproduzierbare und homogene Temperaturverteilung ankommt.

Es stellt sich oft die Aufgabe, Quarzglaselemente miteinander zu verbinden, etwa für die Fertigung von Quarz-Bauteilen mit komplexer Form. In der Regel erfolgt diese Verbindung durch Verschweißen der Bauteile miteinander. In der EP 1 042 241 B1 ist beispielsweise ein Verfahren zum stoßweise Verschweißen von Quarzglasrohren beschrieben. Das Verschweißen beinhaltet ein Aufschmelzen der miteinander zu verbindenden Flächen und ein Anpressen der erweichten Flächen gegeneinander, so dass sich leicht eine unerwünschte plastische Verformung im Bereich der Schweißzone einstellt. Durch aufwändige Nachbearbeitung können derartige Verformungen zwar wieder beseitigt werden, wobei jedoch in der Regel Maßabweichungen bleiben.

Beim Verschweißen von Schwarzglas ergeben sich weitere Schwierigkeiten: Beim Erhitzen ist gegebenenfalls die Temperatur begrenzt auf Werte unterhalb des Schmelzpunktes der eingelagerten Phase (Si-Phase: 1410 °C). Im Falle von eingelagertem Kohlenstoff ist der begrenzende Faktor, dass Kohlenstoff sich durch das starke Erhitzen von der freien Oberfläche löst, oder durch die hohen Prozesstemperaturen oxidert bzw. abbrennt, was zu Blasenbildung führen kann. Außerdem wird durch den oben erwähnten hohen Emissionsgrad des Schwarzglases ein Großteil der von einem Schweißbrenner eingebrachten Hitze wieder emittiert, so dass das Material hell glühend strahlt und im Vergleich zu transparentem oder opaken Quarzglas schnell wieder abkühlt. Ein Fügen oder Umformen von Schwarzglas ist daher durch Heißbearbeitung nicht möglich.

Aus EP 2 048 121 A1 ist bekannt ein Bauteil aus Schwarzglas allseitig an der Oberfläche mit einer Schicht aus transparentem Quarzglas zu versehen. Die Schicht ermöglicht es, das Bauteil aus Schwarzglas durch Heißprozesse zu bearbeiten, insbesondere es mit einem anderen Quarzglasbauteil zu verschweißen. Die transparente Außenschicht wird erzeugt, indem ein poröser SiO₂-Sootkörper einer Gasphasenreaktion mit organischen Siliziumverbindungen unterzogen wird, gefolgt von einer Verglasung unter Vakuum. Die Kohlenstoff-Komponente der organischen Si-Verbindung kann während der Verglasung aus dem Kernbereich des Sootkörpers nicht ausdiffundieren und es entsteht ein Bauteil aus Schwarzglas mit einer Kohlenstoff-Phase im Kernbereich (Kohlenstoffgehalt 30 Gew.-ppm bis 50 000 Gew.-ppm) und mit einer Kohlenstoff-freien (kleiner 30 Gew.-ppm Kohlenstoff), transparenten Außenschicht. Die Außenschicht weist eine Schichtdicke im Bereich von einem Millimeter bis 10 Millimeter auf, wobei die Schichtdicke vom Unterdruck abhängt, der bei der Verglasung des Bauteils eingestellt wird. Die Schichtdickeneinstellung und die Einstellung des Kohlenstoffanteils im Kernbereich des Bauteils gestalten sich komplex, so dass das Verfahren gemäß EP 2 048 121 A1 insgesamt als aufwändig betrachtet werden muss. Außerdem ist hierdurch nur ein Bauteil aus Schwarzglas erhältlich, das allseitig mit einer transparenten Außenschicht versehen ist, die gezielte Ausbildung nur einer Verbindungsfläche ist nicht möglich.

Ein Bauteil aus Schwarzglas mit einer transparenten Außenschicht ist auch US 2014/0072811 A1 zu entnehmen. Hierbei wird eine Platte aus Schwarzglas nach Sintern bei 1500 °C mit einer SiO₂-haltige Schlickermasse in Kontakt gebracht, so dass die Platte allseitig mit einer dünnen Schlickerschicht versehen ist. Es folgt eine Temperaturbehandlung bei 1000 °C bzw. 1600 °C, wodurch eine dichtgesinterte Platte aus Schwarzglas mit einer 0,1 mm dicken, transparenten, blasenfreien Außenschicht erhalten wird. Da eine bereits gesinterte Platte eingesetzt wird, ist die Haftung der Schlickermasse an der Oberfläche relativ schlecht, so dass nur eine dünne Schlickerschicht und in Folge dessen auch nur eine 0,1 mm dünne transparente Außenschicht erreicht wird. Eine derartig dünne Außenschicht ist für ein anschließendes Fügen durch Verschweißen nicht ausreichend, da - wie oben erläutert - die Hitze eines Schweißbrenners sogleich die Außenschicht durchdringt und auf das darunterliegende Schwarzglas einwirkt, dort wieder emittiert wird und somit das Bauteil insgesamt zu schnell abkühlt, um ein Fügen mit einem anderen hochkieselsäurehaltigen Werkstoff zu ermöglichen.

Es ist weiterhin aus DE 10 2004 054 392 A1 ein Verfahren zum Verbinden von Bauteilen aus hochkieselsäurehaltigem Werkstoff bekannt, bei dem eine gießfähige oder pastöse Schlickermasse, die amorphe SiO₂-Teilchen enthält, auf einzelne Verbindungsflächen von dichtgesinterten Quarzglasbauteilen aufgetragen wird. Sofort anschließend werden die Verbindungsflächen zueinander oder aufeinander fixiert. Danach erfolgt eine Trocknung der Verbindungsmasse, die mehr oder weniger zwischen den beiden Verbindungsflächen eingeschlossen ist. Durch entsprechend langsames Trocknen wird eine rissfreie getrocknete Schicht erhalten, die zum Verbinden von relativ kleinen Platten geeignet ist. Dieses Verfahren ist für großflächige Verbindungen mit einem entsprechend hohen Pressdruck allein schon durch das Eigengewicht der zu verbindenden Quarzglasteile nicht mehr geeignet, bzw. würde lange und unwirtschaftliche Trocknungszeiten erfordern, um das Dispersionsmittel der Verbindungsmasse aus der Fügestelle defektfrei zu entfernen. Darüberhinaus ist aus DE 10 2007 030 698 A1 ein bekanntes Verfahren zur Herstellung eines Verbundkörpers aus einem Basiskörper aus opakem Quarzglas und einer dichten Versiegelungsschicht zu optimieren bekannt, dass der Basiskörper mit der dichten Versiegelungsschicht versehen werden kann, ohne dass es zu nennenswerten Veränderungen und Verformungen des opaken Materials kommt. Offenbart wird ein Verfahren, das folgende Verfahrensschritte umfasst: (a) Herstellen des Basiskörpers unter Einsatz eines ersten Schlickers, der grössere amorphe SiO₂-Teilchen enthält, (b) Bereitstellen eines zweiten Schlickers, der kleinere amorphe SiO₂-Teilchen enthält und dessen Zuzammensetzung sich von derjenigen des ersten Schlickers mindestens darin unterscheidet, dass er SiO₂-Nanoteilchen im Bereich zwischen 0,2 Gew.-% bis 15 Gew.-% enthält und der durch eine relativ niedrige Verglasungstemperatur charakterisiert ist, (d) Erzeugen einer Schlickerschicht aus dem zweiten Schlicker auf einer Oberfläche des Basiskörpers, Trocknen der Schlickerschicht und (e) anschliessendes Verglasen der Schlickerschicht unter Bildung der dichten Versiegelungsschicht.

### Technische Aufgabenstellung

Der Erfindung liegt somit die Aufgabe zugrunde, ein Verfahren anzugeben, das eine kostengünstige Herstellung eines mechanisch und thermisch stabilen Verbundkörpers aus hochkieselsäurehaltigem Werkstoff ermöglicht. Insbesondere sollen großflächige Fügeverbindungen durch Verschweißen realisierbar sein.

### Allgemeine Beschreibung der Erfindung

Diese Aufgabe wird durch das erfindungsgemäße Verfahren umfassend die folgenden Verfahrensschritte gelöst:
(a) Herstellen einer eine freie Oberfläche aufweisenden ersten Schlickerschicht unter Einsatz einer ersten Schlickermasse, die ein erstes Dispergiermittel und darin dispergiert erste SiO₂-Teilchen und die Zusatzkomponente in einer ersten Konzentration enthält,
**(b)** Bereitstellen einer zweiten Schlickermasse, die ein zweites Dispergiermittel und darin dispergiert zweite SiO₂-Teilchen und die Zusatzkomponente in einer zweiten Konzentration enthält, die sich von der ersten Konzentration unterscheidet,
**(c)** Bildung eines Verbundkörper-Vorprodukts durch Auftragen der zweiten Schlickermasse auf die freie Oberfläche der ersten Schlickerschicht, und
**(d)** Erhitzen des Verbundkörper-Vorprodukts unter Bildung des Verbundkörpers.

Beim erfindungsgemäßen Verfahren beruht die Herstellung des Verbundkörpers aus hochkieselsäurehaltigen Werkstoffen darauf, dass nach Bereitstellen einer ersten Schlickerschicht aus einer SiO₂-haltigen Schlickermasse, eine zweite SiO₂-haltige Schlickermasse auf die erste aufgetragen wird und die beiden Schlickerschichten gemeinsam gesintert oder verglast werden.

Die erste Schlickerschicht ist im Sinne des erfindungsgemäßen Verfahrens als ein Vorprodukt für eine Basiskörper-Schicht, oder für eine Funktionsschicht des Verbundkörpers aufzufassen.

Das Herstellen einer eine freie Oberfläche aufweisenden ersten Schlickerschicht erfolgt unter Einsatz einer ersten SiO₂-Schlickermasse, die beim Ausgießen von sich aus eine glatte, freie Oberfläche ausbildet. Das Dispergiermittel der Schlickermasse ist in dieser Schlickerschicht im Wesentlichen noch vorhanden, so dass die erste Schlicker-schicht hier nicht einer porösen Grünkörpermasse entspricht, wie sie üblicher-weise beim Trocknen zumindest eines Teils des Dispergiermittels einer Schlickermasse entsteht. Die Oberfläche der Schlickerschicht bildet eine ebene Grenzfläche oder Verbindungsfläche, auf die anschließend die zweite Schlickermasse aufgetragen werden kann, ohne dass es zu einer Durchmischung der beiden Schlickermassen kommt. Das Verbundkörper-Vorprodukt entsteht also durch zwei miteinander in Kontakt liegende Schichten von SiO₂-haltigen Schlickermassen, die sich in ihrem Feuchtegehalt (Anteil an Dispergiermittel) bzw. Feststoffgehalt nur geringfügig unterscheiden. Das Dispergiermittel fungiert dabei an der Grenzfläche als eine Art "Bindephase" zwischen der ersten Schlickerschicht und der zweiten SiO₂-Schlickermasse. Diese Vorgehensweise hat den Vorteil, dass die beiden Schlickermassen beim anschließenden Erhitzen ein ähnliches Schrumpfungsverhalten zeigen.

Das Erhitzen umfasst das Austreiben der Dispergiermittel aus den beiden Schlickermassen und eine Sinter- oder Verglasungsphase, wodurch ein mehrschichtige Verbundkörper aus hochkieselsäurehaltigem Werkstoff als festes Bauteil erhalten wird. Der Verbundkörper weist eine erste Schicht aus hochkieselsäurehaltigem Werkstoff mit einer Zusatzkomponente in einer ersten Konzentration auf, der verbunden ist mit einer zweiten Schicht aus hochkieselsäurehaltigem Werkstoff mit einer Zusatzkomponente in einer zweiten Konzentration, die sich von der ersten Konzentration unterscheidet. Die zweite Schicht ist durch ihren Anteil an der Zusatzkomponente geeignet eine Verbindungsfläche zu einem weiteren Bauteil aus hochkieselsäurehaltigem Werkstoff zu bilden. Der Verbundkörper entsteht durch einen einzigen Heißprozess, wodurch das erfindungsgemäße Verfahren eine kostengünstige Herstellung ermöglicht.

Im Gegensatz dazu sind in den Verfahren gemäß dem Stand der Technik zusätzliche Heißprozesse notwendig, wie etwa das nachträgliche Verschweißen zweier bereits gesinterter Bauteile oder das Verglasen einer Schlickermasse auf einem dicht gesinterten oder vorgesinterten Basiskörper.

Als SiO₂-haltige Schlickermasse wird eine Dispersion oder Suspension SiO₂-Teilchen in einer Flüssigkeit, z.B. Wasser oder Alkohol oder einem Gemisch dieser Stoffe, bezeichnet. Der Anteil an SiO₂-Teilchen kann in beiden Schlickermassen gleich sein, oder sich um bis zu 5 Gew.-% voneinander unterscheiden.

Die erste und die zweite SiO₂-haltige Schlickermasse enthalten jeweils Zusatzkomponenten, die in ihrer Art gleich oder unterschiedlich sein können. Die Konzentration der Zusatzkomponente in der zweiten Schlickermasse unterscheidet sich von der Konzentration in der ersten Schlickermasse, wobei die erste und die zweite Konzentration größer oder gleich Null ist. Das heißt die Konzentration der Zusatzkomponente in einer der beiden Schlickermassen kann auch Null sein.

Als Zusatzkomponente wird hier nicht eine Dotierung im Sinne des Einbringens von Fremdatomen in eine SiO₂-Matrix verstanden. Vielmehr wird als Zusatzkomponente ein Zusatz von Stoffen in solchen Mengen verstanden, die geeignet sind, neben der SiO₂-Matrix makroskopisch eine zweite Phase zu bilden, die zu gezielten Änderungen in physikalischen und chemischen Eigenschaften des damit hergestellten Bauteils führt.

Der Feststoffanteil der beiden SiO₂-haltigen Schlickermassen wird im Wesentlichen vom Anteil an SiO₂-Partikeln bestimmt. Zusätzlich macht die Zusatzkomponente einen weiteren Anteil des Feststoffs aus. Der SiO₂-Anteil im Feststoff beträgt mindestens 85 Gew.-%, um einen mechanisch und thermisch stabilen Verbundkörper aus hochkieselsäurehaltigen Werkstoff zu erhalten.

In einer bevorzugten Verfahrensweise unterscheiden sich die erste und die zweite SiO₂-haltige Schlickermasse voneinander ihrem Feststoffgehalt um maximal 5 Gew.-%. Bei großen Unterschieden im Feststoffanteil der beiden SiO₂-Schlickermassen können sich große Unterschiede in der Schwindung (Schrumpfung) der beiden Massen beim gemeinsamen Erhitzen und Sintern ergeben, die zu Rissen oder anderen Fehlstellen im Verbundkörper führen.

Es hat sich bewährt, dass die SiO₂-haltigen Schlickermassen jeweils einen Feststoffgehalt von mindestens 65 Gew.-%, vorzugsweise von mindestens 75 Gew.-% aufweisen. Bei Schlickermassen mit derartigen Feststoffstoffgehalten ist die Schwindung durch Trocknen und Sintern relativ gering, was die Risiken bei der Fertigung vermindert und zu einer kostengünstigen Herstellung beiträgt. Darüber hinaus wird dadurch die Formstabilität und Maßhaltigkeit des Verbundkörpers verbessert.

Vorteilhafterweise erfolgen die Herstellung der ersten Schlickerschicht gemäß Verfahrensschritt (a) und die Bildung des Verbundkörper-Vorprodukts gemäß Verfahrensschritt (c) unter Einsatz einer saugenden Form, in die die erste Schlickermasse und die zweite SiO₂-Schlickermasse nacheinander eingebracht werden. Das in den Schlickermassen enthaltene Dispergiermittel wird von der saugfähigen Form zumindest zum Teil aufgenommen und beschleunigt den Prozess zur Bildung des Verbundkörpers. Die Form ist dabei so gestaltet, dass nach Einbringen der ersten Schlickermasse diese eine Schlickerschicht mit einer großflächigen freien Oberfläche in der Form bildet, auf die die zweite Schlickermasse aufgetragen wird. Der Einsatz einer saugenden Form, wie sie beispielsweise als Gipsform im Schlickergussverfahren üblich ist, erleichtert dabei die Herstellung eines Endkontur-nahen Verbundkörpers. Die saugende Form im erfindungsgemäßen Verfahren kann jedoch auch Teilbereiche aus nichtsaugenden Material aufweisen, wodurch die Scherbenbildung in eine bestimmte Raumrichtung gezielt beeinflussbar ist.

Um ein Durchmischungsrisiko beim Überschichten der ersten Schlickerschicht mit der zweiten Schlickermasse zu minimieren, hat es sich bewährt, wenn die Herstellung der ersten Schlickerschicht gemäß Verfahrensschritt (a) eine Absetzphase von mindestens 30 Minuten umfasst, nach der ein Überstand an erster Schlickermasse von der Oberfläche der ersten Schlickerschicht entfernt wird. Bei der Herstellung der ersten Schlickerschicht setzt kommt es zeitabhängig zum Absetzen bzw. zum Verdichten der ersten Schlickermasse durch langsamen Entzug des Dispergiermittels, so dass eine erste Schlickerschicht entsteht, über der noch ein Überstand an erster Schlickermasse ansteht. Dieser Überstand wird beispielsweise durch Absaugen entfernt und es verbleibt die freie Oberfläche der ersten Schlickerschicht, die durch die Absetz - oder Verdichtungsphase eine Stabilisierung erfahren hat. Dadurch wird ein Durchdringen der Oberfläche der ersten Schlickerschicht durch den Gießstrahl beim anschließenden Auftragen der zweiten Schlickermasse vermieden. Die erste Schlickerschicht wird auch als Grünkörpermasse oder als Scherben bezeichnet.

Es hat sich weiterhin bewährt, das Auftragen der zweiten SiO₂-haltigen Schlickermasse mittels eines in einem Winkel im Bereich von 3° bis 5° zur freien Oberfläche der ersten Schlickerschicht geführten Gießstrahls durchzuführen. Vorteilhafterweise weist außerdem der Gießstrahl im horizontalen Querschnitt eine längliche Form auf. Diese beiden Maßnahmen führen dazu, dass die Kräfte, die durch den Gießstrahl der zweiten SiO₂-haltigen Schlickermasse auf die frei Oberfläche der ersten Schlickerschicht einwirken, reduziert werden, so dass eine im Wesentlichen ebene, horizontale Oberfläche erhalten bleibt und der Gießstrahl nicht in die von der ersten Schlickermasse gebildete Schlickerschicht eindringt. Als eine längliche Form wird hier eine Rechteck-Form mit abgerundeten Ecken verstanden Die Winkeleinstellung bei der Zuführung der zweiten SiO₂-haltigen Schlickermasse und die längliche Form des Gießstrahlquerschnitts können unter Zuhilfenahme einer Gießrinne erzeugt werden, die eine auf die Oberflächenausdehnung der ersten Schlickerschicht angepasste Breite aufweist und mindestens 50 mm breit ist.

Die beiden SiO₂-haltigen Schlickermassen enthalten bevorzugt amorpheSiO₂-Teilchen mit Teilchengrößen im Bereich von 1 µm bis 50 µm, die in splittriger und/oder sphärischer Form vorliegen. Besonders bevorzugt sind splittrige SiO₂-Teilchen in diesem Teilchengrößenbereich und mit breiter Größenverteilung, weil dadurch eine gute Verzahnung miteinander und ein vorteilhaftes Sinterverhalten bei vergleichsweise geringer Schwindung zu beobachten ist. Es hat sich außerdem gezeigt, dass bei derartigen SiO₂-haltigen Schlickermassen auch eine hohe Grünfestigkeit des Verbundkörper-Vorprodukts erzeugt wird.

In einer bevorzugten Ausführungsform des erfindungsgemäßen Verfahrens sind als Zusatzkomponente in der SiO₂-haltigen Schlickermasse Silizium-Partikel und/oder Kohlenstoff-Partikel enthalten Dadurch wird mindestens eine Schicht des zu fertigenden Verbundkörpers von einem hochkieselsäurehaltigem Werkstoff mit hoher Wärmeabsorption und Wärmeemission gebildet. Die SiO₂-haltige Schlickermasse, die Silizium- und /oder Kohlenstoff-Partikel als Zusatz-komponente enthält, bildet eine Schicht des Verbundkörpers in Form eines Kompositwerkstoffs, der eine Matrix aufweist, die entweder opak vorzugsweise aber transluzent oder transparent ist. In die Matrix sind mit möglichst feiner Verteilung Bereiche einer Phase eingelagert, die Silicium (Si) in elementarer Form enthält und die hier als "Si-Phase" bezeichnet wird, oder die Kohlenstoff-Partikel enthält. Die feinteiligen Bereiche der eingelagerten Phase wirken in der Matrix einerseits als optische Störstellen und führen dazu, dass der Kompositwerkstoff - je nach Dicke - bei Raumtemperatur visuell schwarz oder grau-schwärzlich erscheint, so dass diese Schicht als "Schwarzglas" bezeichnet wird. Wie eingangs schon erläutert, haben die Störstellen auch Auswirkungen auf die Wärmeab-sorption bzw. Wärmeemission des Kompositwerkstoffs insgesamt. Wärme-strahlung zwischen 2 µm und 8 µm, also im Wellenlängenbereich der infraroten Strahlung wird stark absorbiert. Dadurch ist ein Fügen eines derartigen Werkstoffs mittels üblicher Schweißmethoden nicht, oder nur unzureichend möglich.

Die Wärmeabsorption des Kompositwerkstoffs hängt vom Anteil der Si-Phase bzw. vom Anteil der Kohlenstoff-Phase ab. Je größer deren Anteil ist, umso höher sind Absorptionsvermögen und Emissionsvermögen. Der Gewichtsanteil der Si-Phase beträgt vorzugsweise mindestens 0,1 Gew.-%. Andererseits kann ein besonders hoher Volumenanteil der Si-Phase die Herstellung des Kompositwerkstoffs erschweren. Im Hinblick darauf liegt der Gewichtsanteil der Si-Phase bevorzugt bei maximal 5%.

Analoges gilt auch für die Kohlenstoff-Phase. Ihr Anteil im Feststoffgehalt der ersten oder der zweiten SiO₂-haltigen Schlickermasse liegt bevorzugt im Bereich von 0,01 Gew.-% bis 3,0 Gew.-% .

Hinsichtlich des Erhitzens des Verbundkörper-Vorprodukts zur Bildung des Verbundkörpers hat es sich als vorteilhaft erwiesen, wenn dies bei einer Temperatur von maximal 1400°C erfolgt. Diese Maximaltemperatur ist besonders dann von Bedeutung, wenn eine der zu verarbeitenden SiO₂-Schlickermassen eine Si-Phase enthält, da es zu vermeiden gilt, dass die Si-Phase aufschmilzt. Das Verbundkörper-Vorprodukt wird während einer Zeitdauer von mindestens 2 Stunden auf der Sintertemperatur gehalten.

Das erfindungsgemäße Verfahren ermöglicht es einen mechanisch und thermisch stabilen Verbundkörper mit zwei Schichten herzustellen, die einer Basiskörper-Schicht verbunden mit einer Funktionsschicht entsprechen. In solch einer Basiskörper-Schicht aus hochkieselsäurehaltigem Werkstoff ist eine Zusatzkomponente aus Silizium- und /oder Kohlenstoff-Partikel enthalten, wohingegen die zweite Schicht als eine Funktionsschicht aus hochkieselsäurehaltigem Werkstoff ohne eine solche Zusatzkomponente bezeichnet werden kann. Diese Funktionsschicht ermöglicht das Heißbearbeiten, beispielsweise durch Einsatz eines Schweißbrenners.

### Ausführungsbeispiel

Nachfolgend wird die Erfindung anhand einer Patentzeichnung und eines Ausführungsbeispiels näher erläutert. Im Einzelnen zeigt:
- **Figur 1**: ein Fließdiagramm zur Erläuterung des erfindungsgemäßen Verfahrens,
- **Figur 2**: ein Schnittbild eines nach dem erfindungsgemäßen Verfahren hergestellten Verbundkörpers.

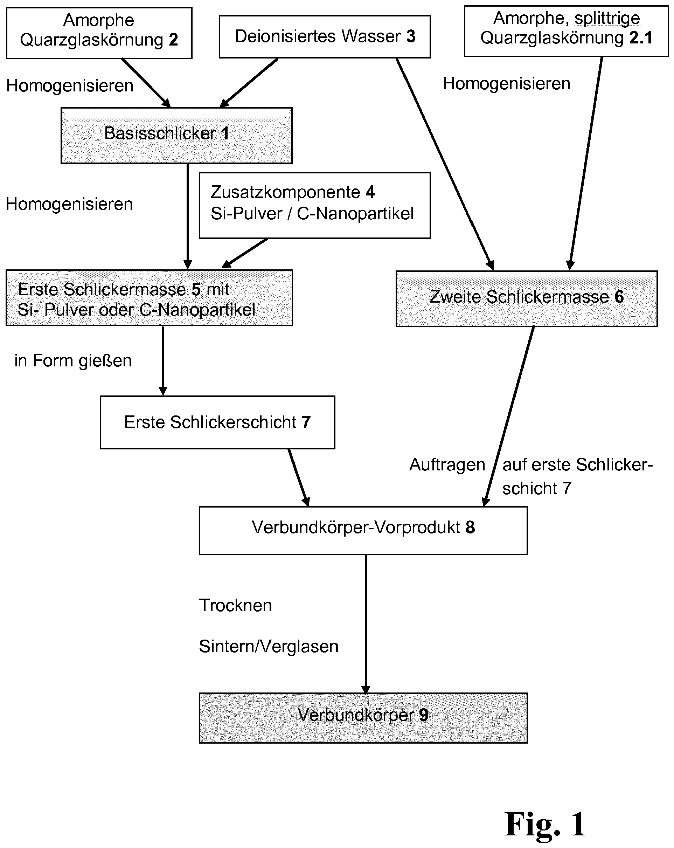

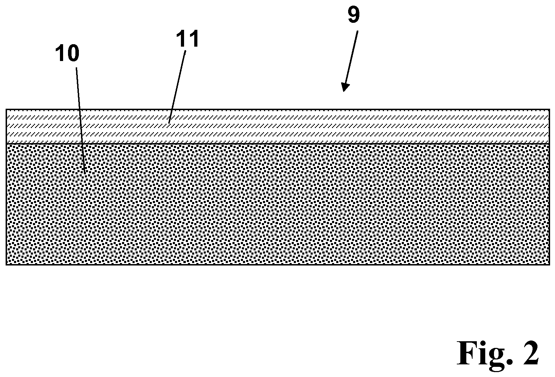

Nachfolgend wird das erfindungsgemäße Verfahren anhand der Herstellung eines Trägers aus Quarzglas für einen Reaktor für die Behandlung eines Wafers unter Bezugnahme auf Figur 1 und 2 beispielhaft erläutert.

### Beispiel 1

### Bereitstellen einer ersten SiO₂-Schlickermasse mit Zusatzkomponente

Für einen Ansatz von 10 kg der ersten Schlickermasse (Basisschlicker) 1 werden in einer mit Quarzglas ausgekleideten Trommelmühle mit ca. 20 Liter Volumeninhalt, 8,2 kg einer amorphen Quarzglaskörnung 2, die durch Schmelzen von natürlichem Quarzrohstoff erhalten worden ist, und die Korngrößen im Bereich zwischen 250 µm und 650 µm aufweist, mit 1,8 kg deionisiertem Wasser 3 mit einer Leitfähigkeit von weniger als 3 µS vermischt. Die Quarzglaskörnung 2 wurde vorab in einem Heißchlorierverfahren gereinigt; es wird darauf geachtet, dass der Cristobalitgehalt unter 1 Gew.-% liegt.

Diese Mischung wird mittels Mahlkugeln aus Quarzglas auf einem Rollenbock bei 23 U/min während einer Dauer von 3 Tagen soweit vermahlen, dass sich ein homogener, erster Basisschlicker 1 mit einem Feststoffgehalt von 82 % bildet. Die SiO₂-Teilchen der so vermahlenen Quarzglaskörnung 2 weisen eine splittrige Kornform auf. Im Verlauf des Vermahlens kommt es infolge des in Lösung gehenden SiO₂ zu einer Absenkung des pH-Werts auf etwa 4.

Anschließend werden aus dem so erhaltenen Basisschlicker 1 die Mahlkugeln entfernt und es wird ein Zusatzkomponente in Form von Silicium-Pulver 4 mit einer metallischen Reinheit von 99,99 % in einer Menge zugemischt bis ein Feststoffgehalt von 83 Gew.-% erreicht ist.

Das Silicium-Pulver 4 besteht aus im Wesentlichen nicht-sphärischen Pulverteilchen mit enger Teilchengrößenverteilung, deren D₉₇-Wert bei etwa 10 µm liegt und dessen Feinanteil mit Teilchengrößen von weniger als 2 µm vorab entfernt worden ist. Das Silicium-Pulver 4 wird durch fortwährendes Mischen in dem Basisschlicker 1 gleichmäßig verteilt.

Die mit dem Silicium-Pulver 4 gefüllte erste Schlickermasse 5 wird weitere 12 Stunden homogenisiert. Die so erhaltene, homogene erste Schlickermasse 5 hat einen Feststoffgehalt von 83 %. Der Gewichtsanteil des Silicium-Pulvers als Zusatzkomponente am gesamten Feststoffgehalt liegt bei 2 % und der Volumenanteil liegt wegen der ähnlichen spezifischen Dichten von SiO₂ und Si ebenfalls bei fast 2 %. Die SiO₂-Teilchen 2 in der fertig homogenisierten Schlickermasse 5 weisen eine splittrige Form auf und zeigen eine Teilchengrößenverteilung, die durch einen D₅₀- Wert von etwa 8 µm und durch einen D₉₀-Wert von etwa 40 µm gekennzeichnet ist.

### Bereitstellen der zweiten SiO₂-Schlickermasse ohne Zusatzkomponente

Es wird eine zweite SiO₂-Schlickermasse 6 hergestellt, die zur Erzeugung der Funktionsschicht des Verbundkörpers 8 dient und keine Zusatzkomponente enthält. Dabei wird der oben näher spezifizierte SiO₂-Basisschlicker als zweite SiO₂-Schlickermasse 6 eingesetzt.

### Herstellung eines plattenförmigen Verbundkörpers

Die erste Schlickermasse 5 mit der Zusatzkomponente aus Silizium-Partikeln 4 wird in eine wannenartige Gipsform eingegossen, wo sie die erste Schlickerschicht 7 mit einer freien Oberfläche der eingegossenen ersten Schlickermasse 5 bildet. Die erste Schlickerschicht 7 bildet eine Basiskörper-Schicht 10 des Verbundkörpers 9. Die erste Schlickermasse 5 nimmt von der möglichen Füllhöhe der Gipsform etwa 2/3 ein. Die Hohlraum Form ermöglicht eine Plattengeometrie mit den Grünmaßen von 500 mm x 500 mm.

Ohne wesentliche zeitliche Verzögerung wird anschließend die zweite Schlickermasse 6, die neben den SiO₂-Teilchen 2.1 keine Zusatzkomponente enthält, auf die freie Oberfläche der ersten Schlickerschicht 7 langsam aufgetragen. Beim Ausgießen der zweiten SiO₂.Schlickermasse 6 wird der Gießstrahl durch den Einsatz einer Gießrinne so geführt, dass er in einem Winkel von 5 ° bezogen auf die Oberfläche der ersten Schlickerschicht 7 auf diese aufgetragen wird. Die Gießrinne hat eine auf die Plattengeometrie abgestimmte Breite von 450 mm und wird in einem minimalen Abstand von der ersten Schlickerschicht 7 im Bereich von etwa einem Millimeter bis 5 mm über diese geführt. Der so erzeugte Gießstrahl zeigt im horizontalen Querschnitt die Form eines abgerundeten Rechtecks mit den Maßen 450 x 5 mm². Es wird so sichergestellt, dass der Gießstrahl der zweiten SiO₂-Schlickermasse 6 die im Wesentlichen ebene Oberfläche des von der ersten SiO₂-Schlickermasse 5 gebildeten ersten Schlickerschicht 7 als Grenzfläche nicht durchdringt. Die zweite SiO₂-Schlickermasse 6 nimmt etwa die Hälfte der verbliebenen Füllhöhe der Gipsform ein und bildet eine gleichmäßige, geschlossene Schlickerschicht mit einer Dicke von etwa 30 mm.

Es ist auch möglich zuerst die SiO₂-Schlickermasse 6 ohne Zusatzkomponente in die Gießform einzugießen und anschließend darauf die SiO₂-Schlickermasse 5 mit Zusatzkomponente aufzutragen.

Zusammen bilden die erste Schlickerschicht 7 und die darauf aufgetragene zweite SiO₂-Schlickermasse 6 das Verbundkörper-Vorprodukt 8, das nach dem Formgießen und Entnahme aus der Gipsform einer Trocknung zu einem Grünkörper unterzogen wird. Die Gipsform nimmt das Dispergiermittel bis auf eine Restfeuchte von etwa 8 % auf. Danach wird das Verbundkörper-Vorprodukt 8 bei etwa 90 °C fünf Tage lang in einem belüfteten Ofen getrocknet. Es folgt die Sinterung bzw. Verglasung in einem Sinterofen unter Luft, wobei das Verbundkörper-Vorprodukt 8 innerhalb von einer Stunde auf eine Heiztemperatur von 1390 °C aufgeheizt und bei dieser Temperatur 5h gehalten wird. Das Abkühlen erfolgt mit einer Abkühlrampe von 1 °C/min auf eine Ofentemperatur von 1000 °C und danach ungeregelt bei geschlossenem Ofen.

Der so erhaltene Verbundkörper 9 ist in Figur 2 im Schnittbild dargestellt. Er weist eine Basiskörper-Schicht 10 aus hochkieselsäure-haltigem Werkstoff mit 2 Vol.-% Zusatzkomponente an Si-Phase und eine aus der SiO₂-Schlickermasse 6 gebildete Funktionsschicht 11aus reinem Quarzglas auf. Der Verbundkörper 9 ist eine Platte mit den folgenden Endmaßen: 450 x 450 x 54 mm.

Die Basiskörper-Schicht 10 des Verbundkörpers 9 zeigt in einer Matrix aus opakem Quarzglas voneinander getrennte, nicht-sphärische Bereiche aus halbmetallischer Si-Phase, die homogen verteilt sind und deren Größe und Morphologie weitgehend denen des eingesetzten Si-Pulvers entsprechen. Die maximalen Abmessungen der Si-Phasenbereiche liegen im Mittel (Medianwert) im Bereich von etwa 1 bis 10 µm. Die eingelagerte Si-Phase führt zur Schwarzfärbung der Basiskörper-Schicht 10 und bewirkt, dass diese bei hoher Temperatur eine hohe Absorption von Wärmestrahlung zeigt. Letzteres bedeutet, dass ein Fügen der Schicht mit eingelagerter Si-Phase mittels Heißbearbeitung nicht möglich ist, da von einem Schweißbrenner eingebrachte Hitze wieder emittiert wird, so dass das Material hell glühend strahlt und im Vergleich zu transparentem oder opaken Quarzglas schnell wieder abkühlt. Dieser Mangel wird von der Funktionsschicht 11 des Verbundkörpers 9 ausgeglichen, die auf einer Seitenfläche mit einer Dicke von 20 mm angeordnet ist. Sie besteht aus opakem Quarzglas und besitzt eine geschlossene Feinporosität von ca. 5 Vol.-% mit einer Porengröße von < 20 µm. Diese Fläche des Verbundkörpers 9 kann nun zum Fügen durch Heißbearbeitung beansprucht werden.

### Beispiel 2

Für die Herstellung eines erfindungsgemäßen Verbundkörpers aus einer Silizium als Zusatzkomponente enthaltenden ersten Schlickermasse 5 und einer zweiten Schlickermasse 6 ohne Zusatzkomponente kommen zwei Schlickermassen zum Einsatz, die bis auf den Feststoffgehalt der ersten bzw. der zweiten Schlickermasse aus Beispiel 1 entsprechen. Hier liegt der Feststoffgehalt der beiden Schlickermassen jedoch jeweils bei etwa 80 Gew.-%.

Die erste Schlickermasse 5 mit Si als Zusatzkomponente wird in eine Gießform zur Herstellung einer quadratischen Platte gefüllt, die nur einen saugfähigen Boden aufweist, deren Wände jedoch aus nicht-saugfähigem Material bestehen. Die Gusshöhe beträgt 4 cm. Es baut sich in der Gießform aufgrund der saugenden Bodenfläche von unten nach oben fortschreitend ein Scherben auf, der der ersten Schlickerschicht 7 entspricht. Nach einer Wartezeit von 3 Stunden hat sich die gewünschte Scherbenhöhe von etwa 3 cm eingestellt, an der Oberfläche verbleibt aber noch eine 5 bis 10 mm dicke Schicht aus noch flüssiger Schlickermasse. Diese Restschlickermasse wird mittels einer Pumpe abgesaugt und/oder durch Abtupfen mit einem saugfähigen, weichen Material entfernt, so dass ein Scherben mit einem Feststoffgehalt von etwa 89 Gew.-% aus der ersten Schlickermasse erhalten wird, auf den sodann die zweite SiO₂-Schlickermasse 6 (ohne Zusatzkomponente) aufgegossen wird. Die Gusshöhe der zweiten Schlickermasse 6 beträgt 10 cm. Zusammen bilden der Scherben aus der ersten Schlickerschicht 7 und die darauf aufgetragene zweite Schlickermasse 6 das Verbundkörper-Vorprodukt 8, das wie in Beispiel 1 beschrieben getrocknet und gesintert wird und dabei den Verbundkörper 9 bildet.

### Beispiel 3

Die erste Schlickermasse 5 enthält in diesem Fall als Zusatzkomponente 4 Kohlenstoff._Für einen Ansatz von 10 kg der ersten Schlickermasse 5 werden in einer mit Quarzglas ausgekleideten Trommelmühle mit ca. 20 Liter Volumeninhalt, 8,2 kg einer amorphen Quarzglaskörnung 2, die durch Schmelzen von natürlichem Quarzrohstoff erhalten worden ist, mit 1,8 kg deionisiertem Wasser 3 mit einer Leitfähigkeit von weniger als 3 µS vermischt. Die Quarzglaskörnung 2 wurde vorab in einem Heißchlorierverfahren gereinigt; es wird darauf geachtet, dass der Cristobalitgehalt unter 1 Gew.-% liegt. Die Quarzglaskörnung 2 weist eine mittlere Teilchengröße unter 70 µm auf.

Diese Mischung wird mittels Mahlkugeln aus Quarzglas auf einem Rollenbock bei 23 U/min während einer Dauer von 3 Tagen soweit vermahlen, dass sich ein homogener, erster Basisschlicker 1 mit einem Feststoffgehalt von 80 % bildet. Im Verlauf des Vermahlens kommt es infolge des in Lösung gehenden SiO₂ zu einer Absenkung des pH-Werts auf etwa 4,5.

Anschließend werden aus dem so erhaltenen Basisschlicker 1 die Mahlkugeln entfernt und es werden als Zusatzkomponente 4 Kohlenstoff-Nanopartikel, wie etwa Carbon-Black (Industrieruß), in einer Menge von 1,2 Gew.-% zugemischt. Der Feststoffgehalt der so erhaltenen ersten SiO₂-Schlickermasse 5 beträgt dann etwa 81 Gew.-%.

Bei der Herstellung der zweiten SiO₂-Schlickermasse 6 werden sphärische SiO₂-Teilchen 2.1 eingesetzt, die sich durch eine mehrmodale Teilchengrößenverteilung mit einem verhältnismäßig engen Maximum der Größenverteilung bei etwa 15 µm (D₅₀-Wert) auszeichnen. Ein Nebenmaximum liegt im Bereich um 2 µm. Diese SiO₂-Teilchen mit einem D₅₀-Wert bei15 µm werden im Folgenden als R₁₅ bezeichnet. Darüber hinaus werden weitere SiO₂-Körnungen eingesetzt, die D₅₀-Werte bei 5 µm und 30 µm aufweisen. Diese Körnungen werden je nach ihrem D₅₀-Wert mit R₅, beziehungsweise als R₃₀ bezeichnet.

Diese SiO₂-Körnungen werden vorab in einem Heißchlorierverfahren gereinigt. Der Verunreinigungsgehalt der gereinigten Körnung ist gering und liegt insgesamt bei weniger als 1 Gew.-ppm. Insbesondere der Gehalt an Li₂O beträgt weniger als 10 Gew.-ppb.

Folgende Rezepturen haben sich bewährt:

**Rezeptur 1**

| | |
|---|---|
| R₃₀ | 250 g |
| R₁₅ | 500 g |
| R₅ | 200 g |

Die genannten Komponenten werden in Wasser dispergiert, so dass sich ein Feststoffgehalt von 86 Gew.-% ergibt.

**Rezeptur 2**

| | |
|---|---|
| R₁₅ | 400 g |
| R₅ | 90 g |

Pyrogene Kieselsäure: 10 g mit BET-Oberfläche von 200 m²/g.

Die genannten Komponenten werden bei Rezeptur 2 in reinem Ethanol dispergiert, so dass sich ein Feststoffgehalt von 84 Gew.-% einstellt.

Die so erzeugten, hoch gefüllten, zweiten Schlickermassen 6 zeigen thixotropes Verhalten. Sie sind gieß- und streichfähig und aus diesem Grund für die erfindungsgemäße Verarbeitungstechnik gut geeignet.

Die Herstellung eines plattenförmigen Verbundkörpers aus der ersten Schlickermasse 5 mit Kohlenstoff-Nanopartikeln als Zusatzkomponente und der zweiten Schlickermasse 6 mit SiO₂-Körnungen nach Rezeptur 1 oder 2 erfolgen nach dem Ablauf und unter Verwendung der gleichen Gipsformgeometrie wie in Beispiel 1 geschildert.

In diesem Fall zeigt die Basiskörper-Schicht 10 des Verbundkörpers 9 in einer Matrix aus opakem Quarzglas homogen verteilte Kohlenstoffpartikel, die zur Schwarzfärbung der Basiskörper-Schicht 10 führt und bewirkt, dass diese bei hoher Temperatur eine hohe Absorption von Wärmestrahlung zeigt. Letzteres bedeutet, dass ein Fügen der Schicht mit eingelagerter C-Phase mittels Heißbearbeitung nicht möglich ist, da von einem Schweißbrenner eingebrachte Hitze wieder emittiert wird, so dass das Material hell glühend strahlt und im Vergleich zu transparentem oder opaken Quarzglas schnell wieder abkühlt. Dieser Mangel wird von der Funktionsschicht 11 des Verbundkörpers 9 ausgeglichen, die auf einer Seitenfläche mit einer Dicke von 10 mm angeordnet ist. Sie besteht aus opakem Quarzglas. Diese Fläche des Verbundkörpers 9 kann nun zum Fügen durch Heißbearbeitung beansprucht werden.

## Patentansprüche

1. Verfahren zur Herstellung eines Verbundkörpers mit einer ersten Schicht aus hochkieselsäurehaltigem Werkstoff mit einer Zusatzkomponente in einer ersten Konzentration, verbunden mit einer zweiten Schicht aus hochkieselsäurehaltigem Werkstoff mit der Zusatzkomponente in einer zweiten Konzentration, die sich von der ersten Konzentration unterscheidet, und die erste und die zweite Konzentration größer oder gleich Null ist, umfassend folgende Verfahrensschritte:
**(a)** Herstellen einer eine freie Oberfläche aufweisenden ersten Schlickerschicht unter Einsatz einer ersten Schlickermasse, die ein erstes Dispergiermittel und darin dispergiert erste SiO₂-Teilchen und die Zusatzkomponente in der ersten Konzentration enthält,
**(b)** Bereitstellen einer zweiten Schlickermasse, die ein zweites Dispergiermittel und darin dispergiert zweite SiO₂-Teilchen und die Zusatzkomponente in einer zweiten Konzentration enthält, die sich von der ersten Konzentration unterscheidet,
**(c)** Bildung eines Verbundkörper-Vorprodukts durch Auftragen der zweiten Schlickermasse auf die freie Oberfläche der ersten Schlickerschicht, und
**(d)** Erhitzen des Verbundkörper-Vorprodukts unter Bildung des Verbundkörpers.

2. Verfahren nach Anspruch 1, **dadurch gekennzeichnet, dass** die erste und die zweite SiO₂-haltige Schlickermasse jeweils einen Feststoffgehalt von mindestens 65 Gew.-%, vorzugsweise von mindestens 75 Gew.-% aufweisen.

3. Verfahren nach Anspruch 1 oder 2, **dadurch gekennzeichnet, dass** die erste und die zweite SiO₂-haltige Schlickermasse sich in ihrem Feststoffgehalt um maximal 5 Gew.-% voneinander unterscheiden.

4. Verfahren nach einem der vorhergehenden Ansprüche, **dadurch gekennzeichnet, dass** die Herstellung der ersten Schlickerschicht gemäß Verfahrensschritt (a) und die Bildung des Verbundkörper-Vorprodukts gemäß Verfahrensschritt (c) unter Einsatz einer saugenden Form erfolgen, in die die erste SiO₂-Schlickermasse und die zweite SiO₂-Schlickermasse nacheinander eingebracht werden.

5. Verfahren nach einem der vorhergehenden Ansprüche, **dadurch gekennzeichnet, dass** die Herstellung der ersten Schlickerschicht gemäß Verfahrensschritt (a) eine Absetzphase von mindestens 30 Minuten umfasst, nach der ein Überstand an erster Schlickermasse von der Oberfläche der ersten Schlickerschicht entfernt wird.

6. Verfahren nach einem der vorhergehenden Ansprüche, **dadurch gekennzeichnet, dass** das Auftragen der zweiten SiO₂-haltigen Schlickermasse mittels eines in einem Winkel im Bereich von 3 ° bis 15 ° zur ersten Verbindungsfläche geführten Gießstrahls erfolgt.

7. Verfahren nach Anspruch 6, **dadurch gekennzeichnet, dass** der Gießstrahl im horizontalen Querschnitt eine längliche Form aufweist.

8. Verfahren nach einem der vorhergehenden Ansprüche, **dadurch gekennzeichnet, dass** die erste und die zweite SiO₂-haltige Schlickermasse amorphe SiO₂-Teilchen enthält mit Teilchengrößen im Bereich von 1 µm bis 50 µm, die in splittriger und/oder sphärischer Form vorliegen.

9. Verfahren nach einem der vorhergehenden Ansprüche, **dadurch gekennzeichnet, dass** als Zusatzkomponente in der SiO₂-haltigen Schlickermasse Silizium-Partikel und/oder Kohlenstoff-Partikel enthalten sind.

10. Verfahren nach Anspruch 9, **dadurch gekennzeichnet, dass** die Si-Partikel mit einem Feststoffanteil im Bereich von 0,1 Gew.-% bis 5 Gew.-% in der SiO₂-haltigen Schlickermasse enthalten sind.

11. Verfahren nach Anspruch 9, **dadurch gekennzeichnet, dass** die Kohlenstoffpartikel mit einem Feststoffgehalt im Bereich von 0,01 Gew.-% bis 3 Gew.-% in der SiO₂-haltigen Schlickermasse enthalten sind.

12. Verfahren nach einem der Ansprüche 9 bis 11, **dadurch gekennzeichnet, dass** das Erhitzen unter Bildung des festen Verbundkörpers bei einer Temperatur von maximal 1400°C erfolgt.

13. Verfahren nach einem der Ansprüche 9 bis 11, **dadurch gekennzeichnet, dass** die Silizium-Partikel und/oder Kohlenstoff-Partikel enthaltende SiO₂-Schlickermasse eine Basiskörper-Schicht des Verbundkörpers bildet.

## Claims

1. A method for producing a composite body with a first layer of a material of a high silicic acid content with an additional component in a first concentration, connected to a second layer of a material of a high silicic acid content with the additional component in a second concentration that differs from the first concentration, and the first and the second concentration are greater than or equal to zero, comprising the following method steps:
**(a)** preparing a first slurry layer having a free surface by using a first slurry mass containing a first dispersing agent and, dispersed therein, first SiO₂ particles and the additional component in the first concentration,
**(b)** providing a second slurry mass containing a second dispersing agent and, dispersed therein, second SiO₂ particles and the additional component in a second concentration that differs from the first concentration,
**(c)** forming a composite-body intermediate product by applying the second slurry mass to the free surface of the first slurry layer, and
**(d)** heating the composite-body intermediate product while forming the composite body.

2. The method according to claim 1, **characterized in that** the first and the second SiO₂-containing slurry mass each have a solids content of at least 65% by wt., preferably of at least 75% by wt.

3. The method according to claim 1 or 2, **characterized in that** the first and the second SiO₂-containing slurry mass differ in their solids content from each other by not more than 5% by wt.

4. The method according to any one of the preceding claims, **characterized in that** the preparation of the first slurry layer according to method step (a) and the formation of the composite-body intermediate product according to method step c) are carried out by using a sucking mold into which the first SiO₂ slurry mass and the second SiO₂ slurry mass are introduced one after the other.

5. The method according to any one of the preceding claims, **characterized in that** the preparation of the first slurry layer according to method step (a) comprises a settling phase of at least 30 minutes, after which a supernatant of the first slurry mass is removed from the surface of the first slurry layer.

6. The method according to any one of the preceding claims, **characterized in that** the second SiO₂-containing slurry mass is applied by means of a pouring stream guided at an angle in the range of 3° to 15° relative to the first connecting surface.

7. The method according to claim 6, **characterized in that** the pouring stream in a horizontal cross-section has an elongated shape.

8. The method according to any one of the preceding claims, **characterized in that** the first and the second SiO₂-containg slurry mass contains amorphous SiO₂ particles with particle sizes in the range of 1 µm to 50 µm that are present in a splintery and/or spherical form.

9. The method according to any one of the preceding claims, **characterized in that** silicon particles and/or carbon particles are contained as the additional component in the SiO₂-containing slurry mass.

10. The method according to claim 9, **characterized in that** the Si particles are contained in the SiO₂-containing slurry mass with a solids content in the range of 0.1% by wt. to 5% by wt.

11. The method according to claim 9, **characterized in that** the carbon particles are contained in the SiO₂-containing slurry mass with a solids content in the range of 0.01 % by wt. to 3% by wt.

12. The method according to any one of claims 9 to 11, **characterized in that** the heating process is carried out at a temperature of not more than 1400°C while forming the solid composite body.

13. The method according to any one of claims 9 to 11, **characterized in that** the SiO₂-containing slurry mass which contains silicon particles and/or carbon particles forms a base body layer of the composite body.

## Revendications

1. Procédé de fabrication d'un corps composite à l'aide d'une première couche en matière à haute teneur en acide silicique comprenant un composant supplémentaire dans une première concentration, lié à une deuxième couche en matière à haute teneur en acide silicique comprenant le composant supplémentaire dans une deuxième concentration qui se distingue de la première concentration, et la première et la deuxième concentrations étant supérieures ou égales à zéro, comprenant les étapes de procédé suivantes :
(a) fabrication d'une première couche de barbotine présentant une surface libre, avec utilisation d'une première masse de barbotine qui contient un premier agent de dispersion et des premières particules de SiO₂ dispersées dedans et le composant supplémentaire dans la première concentration,
(b) fourniture d'une deuxième masse de barbotine qui contient un deuxième agent de dispersion et des deuxièmes particules de SiO₂ dispersées dedans et le composant supplémentaire dans une deuxième concentration qui se distingue de la première concentration,
(c) formation d'un précurseur de corps composite par application de la deuxième masse de barbotine sur la surface libre de la première couche de barbotine, et
(d) échauffement du précurseur de corps composite avec formation du corps composite.

2. Procédé selon la revendication 1, **caractérisé en ce que** la première et la deuxième masse de barbotine contenant du SiO₂ présentent respectivement une teneur en matière solide d'au moins 65% en poids, de préférence d'au moins 75% en poids.

3. Procédé selon la revendication 1 ou 2, **caractérisé en ce que** la première et la deuxième masse de barbotine contenant du SiO₂ se distinguent l'une de l'autre de maximum 5% en poids dans leur teneur en matière solide.

4. Procédé selon l'une quelconque des revendications précédentes, **caractérisé en ce que** la fabrication de la première couche de barbotine selon l'étape de procédé (a) et la formation du précurseur de corps composite selon l'étape de procédé (c) sont réalisées en utilisant un moule aspirant dans lequel la première masse de barbotine de SiO₂ et la deuxième masse de barbotine de SiO₂ sont introduites l'une après l'autre.

5. Procédé selon l'une quelconque des revendications précédentes, **caractérisé en ce que** la fabrication de la première couche de barbotine selon l'étape de procédé (a) comprend une phase de dépôt d'au moins 30 minutes, après laquelle un excès de la première masse de barbotine est retiré de la surface de la première couche de barbotine.

6. Procédé selon l'une quelconque des revendications précédentes, **caractérisé en ce que** l'application de la deuxième masse de barbotine contenant du SiO₂ est réalisée au moyen d'un jet de coulée guidé dans un angle situé dans la plage de 3° à 15° par rapport à la première surface de liaison.

7. Procédé selon la revendication 6, **caractérisé en ce que** le jet de coulée présente une forme allongée en coupe horizontale.

8. Procédé selon l'une quelconque des revendications précédentes, **caractérisé en ce que** la première et la deuxième masses de barbotine contenant du SiO₂ contiennent des particules de SiO₂ amorphes ayant des tailles de particules situées dans la plage de 1 µm à 50 µm, lesquelles sont présentes sous forme éclatée et/ou sphérique.

9. Procédé selon l'une quelconque des revendications précédentes, **caractérisé en ce que** des particules de silicium et/ou des particules de carbone sont contenues en tant que composant supplémentaire dans la masse de barbotine contenant du SiO₂.

10. Procédé selon la revendication 9, **caractérisé en ce que** les particules de Si sont contenues dans la masse de barbotine contenant du SiO₂ avec une teneur en matière solide située dans la plage de 0,1% en poids à 5% en poids.

11. Procédé selon la revendication 9, **caractérisé en ce que** les particules de carbone sont contenues dans la masse de barbotine contenant du SiO₂ avec une teneur en matière solide située dans la plage de 0,01% en poids à 3% en poids.

12. Procédé selon l'une quelconque des revendications 9 à 11, **caractérisé en ce que** l'échauffement est réalisé à une température de maximum 1400°C avec formation du corps composite solide.

13. Procédé selon l'une quelconque des revendications 9 à 11, **caractérisé en ce que** la masse de barbotine de SiO₂ contenant des particules de silicium et/ou des particules de carbone forme une couche de corps de base du corps composite.
